Europäisches Patentamt

European Patent Office

Office européen des brevets

(19)

(11)    EP 0 851 316 B1

(12)    **EUROPEAN PATENT SPECIFICATION**

(45) Date of publication and mention
of the grant of the patent:
**27.03.2002   Bulletin 2002/13**

(51) Int Cl.⁷: **G03G 15/34**, B41J 2/415,
H04N 1/40

(21) Application number: **96203584.6**

(22) Date of filing: **23.12.1996**

(54) **Printer and printing method**

Drucker und Druckverfahren

Imprimante et méthode d'impression

(84) Designated Contracting States:
**DE FR GB**

(43) Date of publication of application:
**01.07.1998   Bulletin 1998/27**

(73) Proprietor: **AGFA-GEVAERT**
**2640 Mortsel (BE)**

(72) Inventors:
• **Peymen, Raf**
**IIE 3800, Septestraat 27 B 2640 Mortsel (BE)**
• **De Broeck, Eric**
**B 2640 Mortsel (BE)**
• **Leonard, Jacques**
**B 2640 Mortsel (BE)**

• **Desie, Guido**
**B 2640Mortsel (BE)**

(56) References cited:
**EP-A- 0 552 803        EP-A- 0 634 862**
**EP-A- 0 671 844        US-A- 5 193 011**
**US-A- 5 231 427        US-A- 5 404 155**
**US-A- 5 530 464**

• **PATENT ABSTRACTS OF JAPAN vol. 096, no. 002, 29 February 1996 & JP 07 273978 A (SANYO ELECTRIC CO LTD), 20 October 1995,**
• **PATENT ABSTRACTS OF JAPAN vol. 095, no. 006, 31 July 1995 & JP 07 058946 A (SANYO ELECTRIC CO LTD), 3 March 1995,**

## EP 0 851 316 B1

**Description**

FIELD OF THE INVENTION

This invention relates to an apparatus and method used in the process of printing and more particularly in Direct Electrostatic Printing (DEP). In DEP, electrostatic printing is performed directly from a toner delivery means on a receiving member substrate by means of an electronically addressable printing head structure.

BACKGROUND OF THE INVENTION

Many printers such as inkjet, thermal transfer and certain types of electrostatic printers including direct electrostatic printers utilise a printing head which comprises an array of printing elements. The print head is arranged across the width of an image receiving substrate, i.e. in what will be called the cross-direction. To print a graphics image or text, each of these printing elements is controlled by a control signal supplied from a control means so that each individual element prints a certain colour as a spot or dot of a predetermined density directly onto the image receiving substrate either directly or indirectly via an intermediate latent image. The substrate advances in the print direction as the printing continues. Normally the print direction is orthogonal to the cross-direction.

In DEP (Direct Electrostatic Printing) the toner or developing material is deposited directly in an imagewise way on the image receiving substrate, the latter not bearing any imagewise latent electrostatic image nor there being an intermediate substrate bearing a latent image. For DEP, the receiving substrate can be an intermediate endless flexible belt (e.g. aluminium, polyimide etc.). In that case the imagewise deposited toner must be transferred onto another final substrate. Preferentially the toner is deposited directly on the final receiving substrate, thus offering a possibility to create directly the image on the final receiving substrate, e.g. plain paper, transparency, etc. This deposition step is followed by a final fusing step.

DEP differs from classical electrography, in which a latent electrostatic image on a charge retentive surface is developed by a suitable material to make the latent image visible. Subsequently, either the powder image is fused directly to said charge retentive surface, which then results in a direct electrographic print, or the powder image is subsequently transferred to the final substrate and then fused to that medium. The latter process results in an indirect electrographic print. The final substrate may be a transparent medium, opaque polymeric film, paper, etc. DEP is also markedly different from electrophotography in which an additional step and additional member is introduced to create the latent electrostatic image. More specifically, a photoconductor is used and a charging/exposure cycle is necessary.

A DEP device is disclosed in e.g. US-A-3 689 935. This document discloses an electrostatic line printer having a multi-layered particle modulator or printing head structure comprising :

- a layer of insulating material, called an isolation layer ;
- a shield electrode consisting of a continuous layer of conductive material on one side of the isolation layer ;
- a plurality of control electrodes formed by a segmented layer of conductive material on the other side of the isolation layer ; and
- at least one row of apertures.

Each control electrode is formed around one aperture and is isolated from each other control electrode.

Selected potentials are applied to each of the control electrodes while a fixed potential is applied to the shield electrode. An overall applied propulsion field between a toner delivery means and a receiving member support projects charged toner particles through the row of apertures of the printing head structure. The intensity of the particle stream is modulated according to the pattern of potentials applied to the control electrodes. The modulated stream of charged particles impinges upon a receiving member substrate, interposed in the modulated particle stream. The receiving member substrate is transported in a direction orthogonal to the printing head structure, to provide a line-by-line scan printing. The shield electrode may face the toner delivery means and the control electrode may face the receiving member substrate. A DC field is applied between the printing head structure and a single back electrode on the receiving member support. This propulsion field is responsible for the attraction of toner to the receiving member substrate that is placed between the printing head structure and the back electrode.

A DEP device is well suited to print half-tone images without using half-tone cells. The density variations present in a half-tone image can be obtained by time or voltage modulation of the potential applied to the individual control electrodes. In most DEP systems large apertures are used for obtaining a high degree of density resolution (i. e. for producing an image comprising a high amount of differentiated density levels). By using apertures with a large aperture diameter, it is advisable to provide multiple rows of apertures in order to obtain a homogeneous grey density for the whole image.

For text quality, however, a high spatial resolution is required. This means that small apertures must have to be made through said plastic material, said control electrodes and said shield electrode. If small apertures are used in the printing head structure in order to obtain a high spatial resolution, then the overall printing density is rather low. This means that either the printing speed too is rather low, or that multiple overlapping rows of addressable apertures have to be implemented, yielding a complex printing head structure and printing device.

Black or white banding is the formation of repetitive printing artifacts which are bands of one colour, either the absence of printing called white banding in which the normally white substrate is exposed, or the repetitive excessive application of dye, toner or pigment, called black banding. Printing head structures with enhanced density and/or spatial control have been described in the literature. In US-A-4 860 036, for example, a printing head structure has been described consisting of at least 3 (preferentially 4 or more) rows of apertures which makes it possible to print images with a smooth page-wide density scale without white banding in the print direction.

The main drawback of this known printing head structure deals with the toner particle application module, which has to be able to provide charged toner particles in the vicinity of all printing apertures with a nearly equal flux. In US-A-5 040 004 it is disclosed to solve this problem by the introduction of a moving belt which slides over an accurately positioned shoe that is placed at close distance from the printing head structure. However, it is evident that a toner application module operated by a friction method cannot provide stable results over long periods of time, due to wear of the belt by the friction of the belt over said shoe.

In US-A-5 214 451 it is disclosed that the problem of providing charged toner particles in the vicinity of all printing apertures with a nearly equal flux, could be solved by the application of different sets of shield electrodes upon the printing head structure, each shield electrode corresponding to a different row of apertures. During printing the voltage applied to the different shield electrodes corresponding to the different rows of apertures is changed, so that those apertures that are located at a larger distance from the toner application module are tuned for a larger electrostatic propulsion field from said toner application module towards said back electrode structure. resulting in enhanced density profiles.

In US-A-5 404 155 a direct electrostatic printing device is described wherein the overall homogeneity of the image is enhanced by taking into account that the potentials applied to neighbouring apertures have an influence upon the potential that has to be applied to the actual aperture in order to obtain a pixel density of constant and reproducible value.

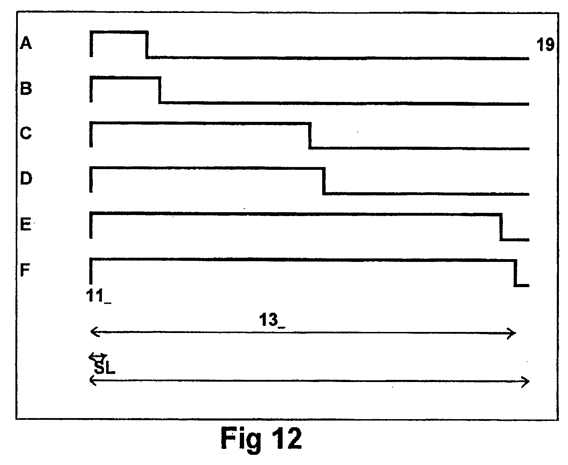

US-A-5 193 011 describes a method of operating a DEP device which consists of time modulating the voltage pulses supplied to the apertures so as to influence the amount of toner which is propelled there through. There is a non-linear relationship between the grey value of the spot produced on the receiving substrate and the length of the pulse applied to a control electrode associated with an aperture. Firstly, the aperture does not propel toner instantaneously - there is an initial delay. Secondly, the human eye does not respond linearly but rather responds logarithmically to changes in grey values. Hence, there is no linear relationship between the quantity of toner required to produce a particular grey value and the grey value itself. The length of a pulse which may produce a particular grey value must be determined experimentally and this length stored in some sort of memory, for instance in a look-up table. Typical control pulses are shown schematically in Fig. 12.

There remains the need to improve the control of print heads with an array of print elements, in particular those using pulse wave modulation of the print signal.

OBJECTS OF THE INVENTION

An object of the present invention is to reduce the magnitude and frequency of printing errors and artifacts introduced when printing with a printing head including an array of print elements.

A further object of the present invention is to reduce the peak energy consumption of such a printing head.

A still further object of the invention is to reduce white banding in the print direction for parts of the image with low density and which are printed using a print head structure with an array of printing elements, in particular, using a DEP device including apertures with a large, i.e. greater than 1, aspect ratio.

SUMMARY OF THE INVENTION

The above objects are realised by providing a printing device in accordance with claims 1 or 2.

The above objects are also realised by printing methods according to claim 15 or claim 16.

The dependent claims define further embodiments of the present invention.

The present invention, its embodiments and advantages are described in the following with reference to the drawings.

BRIEF DESCRIPTION OF THE DRAWINGS

Fig. 1 is a schematic illustration of a possible embodiment of a DEP device according to an embodiment of the present invention.

Figs. 2A to 2I show schematically the various grey values which are obtained when a pixel has 8 sub-lines.

Fig. 3 shows a waveform for a print control signal in accordance with a first embodiment of the present invention.

Fig. 4 shows the waveform of a binary print control pulse in accordance with a third embodiment of the present invention.

Figs. 5 to 7 show representative waveforms for print control signals in accordance with the present invention.

Figs. 8A to 8F show further waveforms of print control pulses in accordance with the present invention.

Fig. 9 is a block diagram of a control circuit in accordance with the present invention.

Fig. 10 is a first view of a printing head structure in accordance with the present invention.

Fig. 11 is a further view of the printing head structure of Fig. 10.

Fig. 12A to 12F show known waveforms for print control signals.

DETAILED DESCRIPTION OF THE INVENTION

**Definitions**

Line time (LT): the time for printing one pixel dot. When an aperture is kept open during the total line time, maximum density is achieved in that one pixel dot.

Write time (WRT): a fraction of LT. By changing WRT grey scale printing is effected. In an embodiment of our invention, e.g., LT is divided in 128 parts, and WRT varies between 0/128 LT to 128/128 LT.

$$\text{Wait time (WAT)} : \text{LT} - \text{WRT} = \text{WAT}.$$

**Description of a printing device and method according to the invention**

The present invention will be described with reference to certain specific embodiments and with reference to the drawings but the invention is not limited thereto but only by the claims. In particular, the present invention will be described with respect to a DEP device and a method of operating a DEP device but the invention is not limited thereto, but may find application in printers and printing methods in general which use a printing head with an array of print elements.

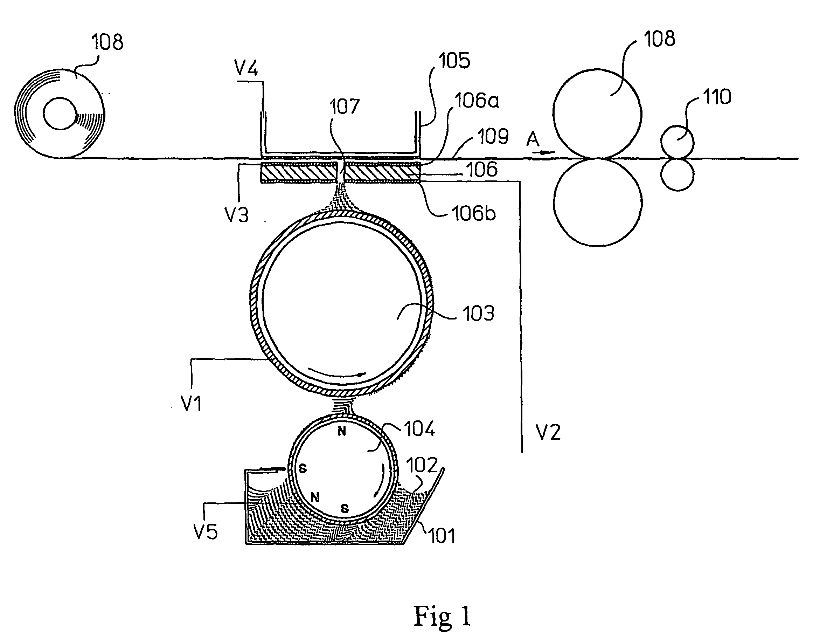

A non limiting example of a device 100 for implementing a DEP method using toner particles suitable for use with any of the embodiments of the present invention is shown schematically in Fig. 1 and comprises:

(i) a toner delivery means 101, comprising a container for developer 102, a charged toner conveyer 103 and a magnetic brush 104, this magnetic brush forming a layer of charged toner particles upon said charged toner conveyer 103,

(ii) a back electrode 105, and

(iii) a printing head structure 106, made from a plastic insulating film, coated on both sides with a metallic film. The printing head structure 106 comprises one continuous electrode surface, hereinafter called "shield electrode" 106b facing, in the shown embodiment, the toner delivering means 101 and a complex addressable electrode structure, hereinafter called "control electrode" 106a around printing apertures 107, facing, in the shown embodiment, the toner-receiving member 109 in said DEP device. Said printing apertures 107 are arranged in an array structure for which the total number of rows can be chosen according to the field of application. Across the width of the printing head structure 106 and at least as wide as the toner-receiving member 109, a large number AN of independently addressable apertures 107 are provided. Typically, the number of apertures AN depends upon the printing resolution required, e.g. for an A4 size paper toner receiver 109 and 282 dots per inch (DPI) print resolution, AN may be 2,400. The location and/or form of the shield electrode 106b and the control electrode 106a can, in other embodiments of a device 100 or a DEP method using toner particles according to the present invention, be different from the location or form, respectively, shown in Fig. 1.

(iv) Conveyer means 108 to convey the image receiving member 109 for said toner between said printing head structure 106 and said back electrode 105 in the direction indicated by arrow A.

(v) Means for fixing 110 said toner onto said image receiving member 109.

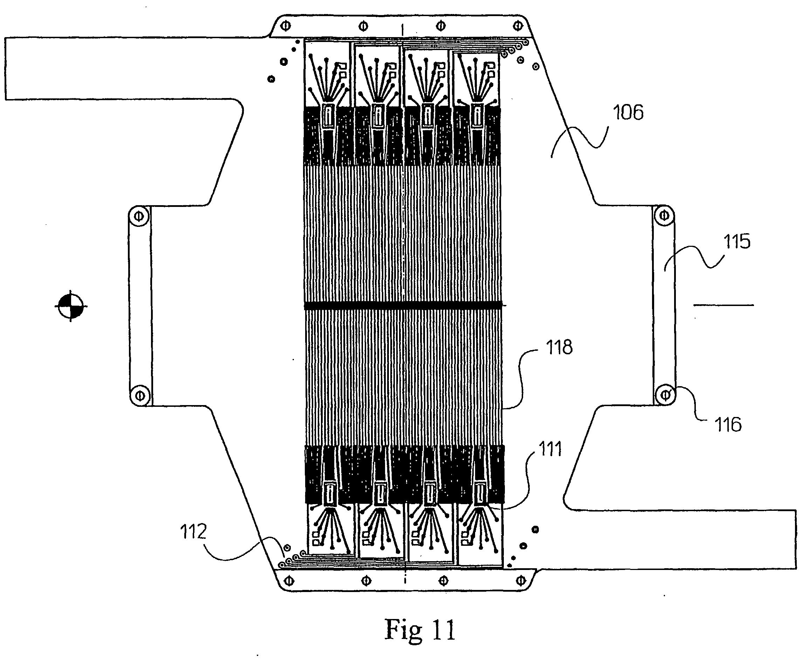

(vi) Electric field control means 111, shown in Fig. 11, that controls the electric field applied to said individual control electrodes 106a.

Between said printing head structure 106 and the charged toner conveyer 103 as well as between the control electrode around the apertures 107 and the back electrode 105 behind the toner receiving member 109 as well as on the single electrode surface or between the plural electrode surfaces of said printing head structure 106 different electrical fields are applied. In the specific embodiment of a device, useful for a DEP method, shown in fig 1. voltage V1 is applied to the sleeve of the charged toner conveyer 103, voltage V2 to the shield electrode 106b, a voltage V30 or a voltage from V30 up to V3n for the control electrode 106a. Voltage V4 is applied to the back electrode behind the toner receiving member.

Although in Fig. 1 a device for a DEP method in accordance with an embodiment of the present invention using two electrodes 106a and 106b on printing head 106 is shown, it is possible to implement a DEP method in accordance with the present invention using toner particles and devices with different constructions of the printing head 106. It is, e.g. possible to implement a DEP method in accordance with the present invention with a device having a printing head 106 comprising only one electrode structure as well as with a device having a printing head 106 comprising more than two electrode structures. The apertures 107 in these printing head structures can have a constant diameter, or can have a broader entrance or exit diameter. The shield electrode 106b can also be segmented and each segment assigned to a separate printing aperture 107 so that both control electrode 106a and shield electrode 106b are individually modulatable.

The back electrode 105 of the DEP device 100 can also be made to co-operate with the printing head structure 106, said back electrode 105 being constructed from different styli or wires that are galvanically isolated and connected to a voltage source as disclosed in e.g. US-A-4 568 955 and US-A-4 733 256.

The back electrode 105, co-operating with the printing head structure 106, can also comprise one or more flexible PCB's (Printed Circuit Board). In accordance with the present invention, multiple voltages V20 to V2n can be applied to the shield electrode 106b and/or voltages V40 to V4n can be applied to back electrode 105. Voltage V5 is applied to the surface of the sleeve of the magnetic brush 104.

The DEP device 100 in accordance with an embodiment of the present invention may be able to perform grey scale printing. For grey scale printing the electric field applied to the control electrode 106a can be controlled either by time modulation or by a combination of time modulation and voltage modulation in accordance with the present invention.

In the case when grey scale printing is performed only by time modulation, the electric field applied to the control electrode 106a is, in a device according to the present invention, controlled by the control means 111 in a way as described below.

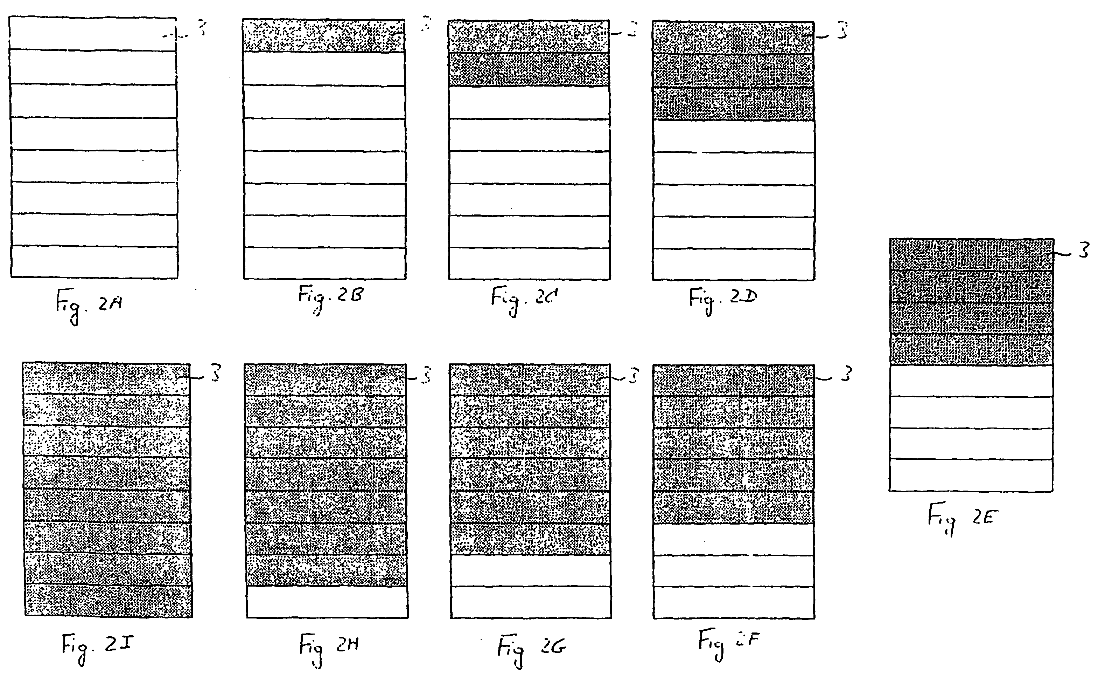

When only time modulation is used for grey scale printing, a DEP device according to an embodiment of the present invention, the line time (LT) is divided into several smaller time units (called sub-lines (SL). The grey scale printing proceeds by providing a voltage V30 (voltage allowing maximum density to be printed) at the control electrode 106a during a certain number of said smaller time units (i.e. during the write time (WRT)) and having a voltage V3n (blocking voltage giving minimum density) during LT - WRT = WAT (wait time). The above implies that maximum density is printed when WRT = LT and minimum density when WRT = 0. The printing of intermediate densities proceeds at values of WRT between these two extremes. The printed pixels by such a method are shown schematically in Figs. 2A to I. For clarity purposes, the number of sub-lines 3 in Fig. 2 has been chosen as 8. For white printing as in Fig 2A, no toner is transferred. For black printing as in Fig. 2I, toner is transferred in all 8 of the sub-lines 3. For intermediate values, Figs. 2B to 2H. more or less of the sub-lines 3 are provided with toner. To obtain good grey value resolution it is normally necessary to have many more sub-lines 3. Typically, 64, 128 or 256 may be used.

As shown schematically in Fig. 12A and F, known waveforms 19 of a print control signal have a line time LT divided into sub-lines. In Fig. 12, the waveforms are divided arbitrarily into 32 sub-lines SL, so that the WRT giving maximum density is (32/32)LT and the WRT giving minimum density is (0/32)LT or 0 ms. Fig. 12A to F show waveforms 19 for print control signals to print (4/32)LT, (5/32)LT, (16/32)LT, (17/32)LT, (30/32)LT and (31/32)LT density values. Printing using the waveforms 19 shown in Fig. 12 may have certain disadvantages. Firstly, the voltage pulses for all the apertures AN which are destined to print some grey value in a print cycle for one pixel, have simultaneous leading edges 11. This means that the peak of the electrical energy applied to the printing head structure 106 is a maximum at the start of each print cycle for a pixel. Secondly, the spatial distribution of toner on the image receiving member 109 for a particular grey value is always the same for each pixel with this grey value. This can result in banding, i.e. lines or areas of either black or white which are printing errors generated by the repetition of regular geometrical structures of toner density. This is especially the case for image areas of nearly equal image density.

It is also possible, in a DEP device 100 according to an embodiment of the present invention, to use control means 111 that can control the electric fields on the control electrode 106a by a combination of time- and voltage modulation. The electric field applied to the control electrode 106a is, in a device 100 according to the present invention, controlled by the control means 111, in the case when grey scale printing is performed by a combination of time and voltage modulation, in a way as described immediately below.

When voltage modulation is used in addition to time modulation for grey scale printing in a DEP device 100 according to an embodiment of the present invention, the write time (WRT) of each pixel is controlled as described for time modulation control, but the amount of toner particles passing through the printing aperture 107 is additionally controlled by applying a weaker or stronger blocking voltage (V3). For instance in a DEP device 100, comprising a back electrode with V4 = + 600 V, the printing by negatively charged toner particles through a printing aperture 107 can totally be blocked when V3n = - 300 V and maximum density is achieved when V30 = 0 V is applied to the control electrode 106a. For printing densities in between maximum density and minimum density, the write time WRT may be varied between 0 and the line time LT and also V3 may be varied between the values V30 and V3n. The variation of voltage V3 gives a further variable parameter in the generation and selection of appropriate waveforms 19.

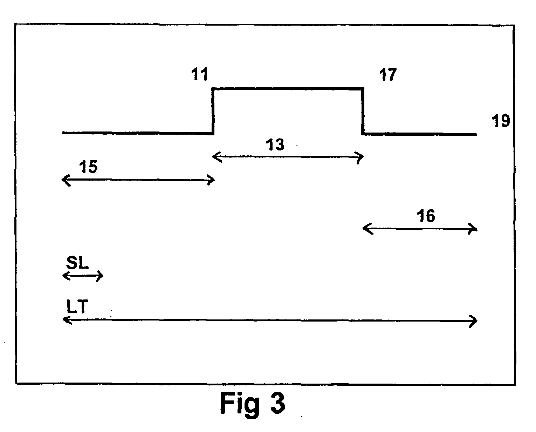

The waveform 19 of a control pulse supplied to the control electrode 106a from the control means 111 according to a first embodiment of the present invention is shown schematically in Fig. 3. An arbitrary waveform 19 for a particular grey value has a leading edge time 15 between the start of each print cycle for a pixel and a leading edge 11, a trailing edge time 16 from the trailing edge 17 and the end of the line time LT, and a time length 13. Leading edge and trailing edge times 15, 16 may be set by electronic control means 111 as disclosed in US-A-5 504 462.
The values of leading, trailing edge times and pulse length 15, 16, 13 may be stored in memory.

Using waveforms 19 in accordance with the first embodiment may reduce the energy peaks on the control electrode 106a when there is a mixture of grey values in a line of printing and when the leading edge times 15 for neighbouring grey values are selected to be different from each other. Further, where there is a mixture of grey values, the different start times within the line for the different grey values reduce the risk of banding. However, where large areas of the same grey value are to be printed, the energy peak may be moved to a different time of the cycle but not necessarily reduced substantially in magnitude. Similarly, when large areas of one grey value are printed there is still a risk of banding. Further, where large areas of black or dark grey are to be printed, the pulse length 13 is very close to the line time LT so there is little room to vary the leading and trailing edge times 15, 16.

In accordance with a second embodiment of the present invention the leading edge time 15 for a certain grey value required for a particular aperture 107 is not fixed but may be given a variety of values. For instance, if the pulse length 13 is 50% of LT, the leading edge time 15 may be varied between 0 and 50% LT. In accordance with a first modification of the second embodiment, the leading edge time 15 may be selected randomly within the range 0 to 50% LT. Alternatively in a second modification, a series of N possible values $15_{1-N}$ of the leading edge time 15 for a particular grey value may be stored in a memory. Each time this certain grey value is to be printed, one of the N values of the leading edge time $15_{1-N}$ is selected either randomly or as the next in a defined sequence. Alternatively in a third modification, the leading edge time 15 may be calculated each time the grey value is to be printed in accordance with a suitable algorithm which generates acceptable but varying values for the leading edge time 15.

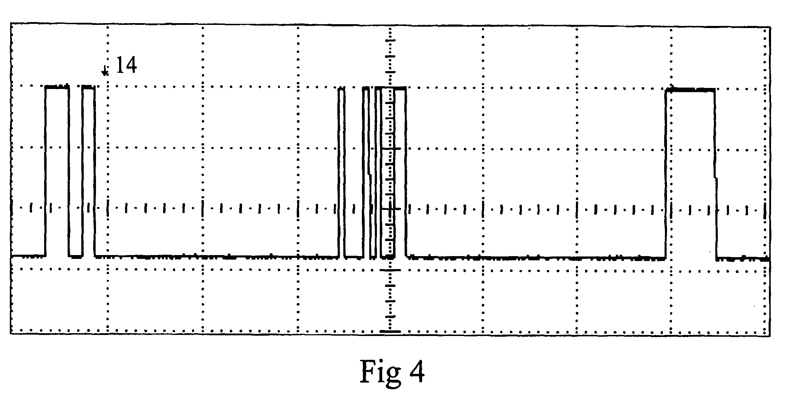

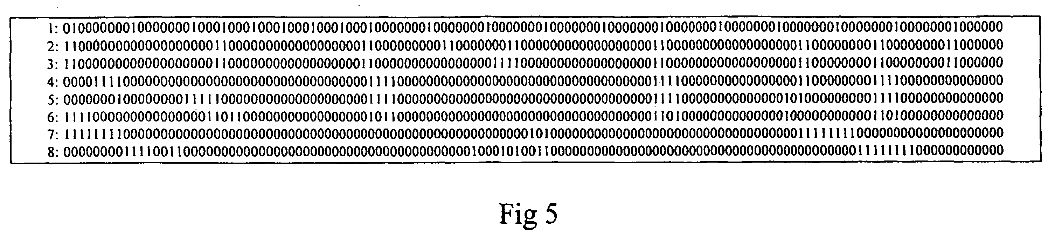

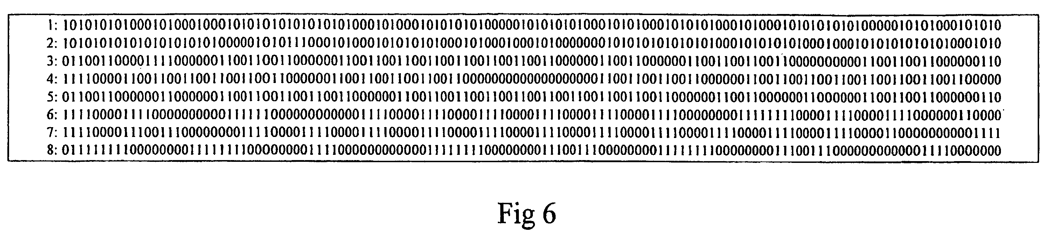

The waveforms 19 in accordance with the first and second embodiments have a simple structure. This means that the leading edges 11 for the pulses going to the various apertures 107 of one line of print may be distributed throughout the time LT. This reduces the risk of banding even when large areas of the same grey value are printed. However, there is still a high probability that all the apertures 107 are requiring energy simultaneously at some time during the printing cycle and that the maximum energy peak is still high. In accordance with a third embodiment of the present invention, the waveforms 19 may have a complex form. As shown schematically in Fig. 4 an arbitrary waveform 19 suitable for printing an arbitrary grey value may be formed from a discrete number of individual pulses 14. The line time LT in Fig. 4 is 128 time intervals. The pulses 14 are preferably of the same height but the invention is not limited thereto. The individual pulses 14 may be distributed throughout the line time LT. The individual pulses 14 need not all be of the same length. If all the pulses are of the same height and have time lengths which are multiples of a certain minimum time. the waveforms 19 may be represented by binary numbers. For each elementary time period in which a pulse is high, the waveform may be represented by one value of a binary value, e.g. "1" or "0". Every elementary time period in which there is no signal, may be represented by the other binary value, e.g. "0" or "1". Hence, waveforms 19 may be represented as a series of binary values, a first binary value indicates that a voltage pulse of a predetermined height is applied for a unit time, i.e for a sub-line time, the second binary value indicates that no voltage pulse is applied for a sub-line time. As examples of such binary waveforms 19, eight suitable waveforms 19 in accordance with the present invention are given in Figs. 5, 6 and 7 for grey values of 12%, 44% and 50%, respectively, as binary bitmaps. The last bitmap of figure 5 is the binary representation of the waveform shown in figure 4. The representation of waveforms 19 as binary numbers makes them particularly suitable for storing and manipulation in a digital electronic device such as a personal computer. For that purpose it is advantageous to choose the number of waveforms as a power of 2 (e.g. 2, 4, 8, 16, ...)

Waveforms 19 of the kind shown in Figs. 5 to 7 may be selected based on the result of printing trials by trial and error. The particular waveforms 19 which give good printing are selected, i.e. those having good grey value uniformity without banding, and may be stored in binary form in a memory.

In accordance with a modification of the third embodiment, and instead of generating and selecting the waveforms $19_{1-M}$ on a trial and error basis, the length and distribution of individual pulses 14 for a certain waveform 19 may be generated in accordance with an algorithm or routine. For instance, if a pulse length of X sub-lines is to be produced for a particular grey value, the necessary waveform 19 could be generated by selecting X individual pulses 14, each one with a pulse length of 1 sub-line, within the line time LT on a random basis. Thus, the individual pulses 14 may be selected stochastically within the line time LT.

In accordance with a fourth embodiment of the present invention, more than one waveform 19 is selected and tested for acceptability for each grey value and the approved waveforms may be stored in a memory. For each grey value to be printed by the printing device, a series of M suitable waveforms $19_{1-M}$ may be determined and stored. On each occasion that a particular grey value has to be printed, one of the M waveforms $19_{1-M}$ is selected either as the next in a sequence (e.g. $M_1$, $M_2$, $M_3$, etc.) or in accordance with a certain algorithm or routine. Alternatively, one of the waveforms $19_{1-M}$ may be selected randomly from the potential candidates $19_{1-M}$ each time the relevant grey value is required.

In accordance with a fifth embodiment of the present invention, instead of selecting a certain waveform 19 stored in a memory as described with reference to embodiment 4 and starting with the first bit of the waveform 19 at time zero of the particular line time, the start position within the line time (i.e. the leading edge delay) is chosen randomly, or is chosen as the next in a sequence or is chosen in accordance with an algorithm or routine.

In accordance with all the embodiments of the present invention, the waveforms 19 for different grey values may be generated from complex waveforms including a plurality of individual pulses 14. By careful choice of the length and location of each of the pulses 14 of the relevant waveform 19 within line time LT for each grey value and also the relationships of these lengths and locations to the lengths and locations in the waveforms 19 for other grey values, the energy consumption for the plurality of apertures 107 may be more evenly spread over the whole of the line time LT. Similarly, the peak energy consumption during the printing cycle may be reduced. Further, the distribution of pulses 14 throughout the line time reduces the risk of banding still further.

It is particularly preferred if the individual pulses 14 making up the various versions of waveform 19 for a particular grey value are chosen so that when comparing two waveforms 19, there is a low correlation between them. If there is a low correlation, there is also a low probability that repetitive artifact printing structures such as banding can occur due to similar patterns in the sub-lines of two different grey values coinciding with each other. Where there is little correlation between waveforms 19 for different grey values or between alternative waveforms for one grey value, there is little possibility of spatially rhythmic structures appearing in the printing which may produce banding or other printing artifacts. It is clear that these artifacts are especially visible in regions of equal or nearly equal image density. In comparing the correlation of two waveforms 19 in accordance with the present invention, the following criterium was used. The individual waveforms (WF) are represented by their binary bit sequence (BS). The indices g, a and k indicate the grey-level number, the number of individual waveforms for one grey value, and the bit position in one waveform. The total number of grey values is G, the total number of waveforms in one grey value is A, the number of sub-lines is S. The correlation is determined as:

$$CORI = \frac{2 . \sum_{i=1}^{A-1} \sum_{j=i+1}^{A} \sum_{k=1}^{S} XOR(BS_{gik}, BS_{gjk})}{A . (A-1) . S} . 100\%$$

The operator $XOR(BS_{gik}, BS_{gjk})$ has the following results:

    1 if $(BS_{gik})=0$ and $(BS_{gjk})=1$,
    1 if $(BS_{gik})=1$ and $(BS_{gjk})=0$;
    0 if $(BS_{gik})=0$ and $(BS_{gjk})=0$, and
    0 if $(BS_{gik})=1$ and $(BS_{gjk})=1$.

In accordance with the present invention this will be called the inner Exclusive OR correlation. It is particularly preferred if the inner Exclusive Or correlation between the accepted waveforms 19 for each grey value is high.

It is also particularly preferred in accordance with the present invention if the Exclusive OR correlation between waveforms of neighbouring grey values is high. The Exclusive OR correlation of neighbouring grey values is given by a comparison between two wave forms one for each grey value, indicated by indices g and n:

$$CORN = \frac{\sum_{k=1}^{S} XOR(BS_{gik}, BS_{nik})}{S} \cdot 100\%$$

In accordance with the present invention this Exclusive OR value will be described as the neighbouring Exclusive OR correlation.

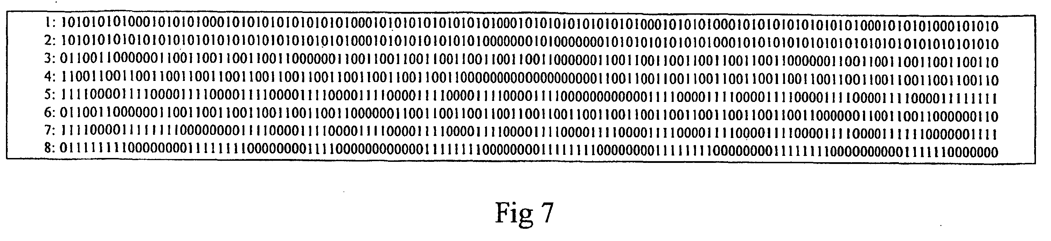

It is now described how such advantageous waveforms, or the binary bit sequences that represents such waveforms, may be obtained. In one embodiment, these waveforms or bit sequences may be constructed manually. For each possible grey value, e.g. for grey values ranging from 0 to 127 or 128, the operator generates a sequence of 0's and 1's like the sequences as represented in Fig. 7. The total number of 0's and 1's preferably corresponds with the number of sub-lines in a line. It is up to the operator to enter manually adequate bit sequences that may be used for generating the waveforms. The enter bit sequences are preferably stored in a memory means. The operator may evaluate his performance by computing the above described correlation parameters. If he is not satisfied about the resulting parameters for some grey values, he may enter another bitsequence. In a preferred embodiment, the generation of bit sequences may be further automated. An algorithm may generate first a bitsequence for grey value 0. This corresponds normally to a bit sequence containing only 0's.

Then the algorithm generates a second bit sequence for grey value 1. Normally, this corresponds with one bit in the sequence set to 1, whereas all other bits are set to 0. The bit which is set to 1 may be randomly located somewhere in the bitsequence. The exact location of this 1-bit may be the result of a random number generator, generating numbers - preferably uniformly - from 1 to the number of bits in the bit sequence.

Then the algorithm generates a third bit sequence for grey value 2. Normally, this corresponds with two bits in the sequence set to 1, whereas all other bits are set to 0. The bits which are set to 1 may be randomly located somewhere in the bitsequence. The exact location of these 1-bits may be the result of a random number generator, generating numbers - preferably uniformly - from 1 to the number of bits in the bit sequence. If a next random number coincides with a bit location already set to 1, then the next random number is used to locate the next 1-bit. Alternatively, the random number generator may be re-scaled after each bit set between 1 and the previous maximum value minus one. The random number generated then gives the index of the next 0-bit to be set to 1, by skipping the 1-bits.

This process may go on until all grey values have a randomly generated bit sequence. The performance of the algorithm may be checked afterwards by evaluating the correlation parameters according to the above formulae. If a correlation parameter for a specific grey value is unsatisfactory, then a new bitsequence may be generated randomly again.

In another embodiment, for each grey value a plurality of bit sequences are generated, e.g. 10 bit sequences, and each time this plurality is generated according to the above random method, then the correlation parameters are computed for each of the generated bit sequences. This way, each bit sequence gets a performance number. The bit sequence having the best performance number may then be selected. If the performance numbers are unsatisfactory, the number of randomly generated bit sequences for each grey value may be increased. If two or more different bit sequences for the same grey value have a same correlation score, then another score may be computed, i.e. the auto-correlation parameter of the bit sequence. This parameter is computed by taking the bit-wise exclusive or of the bit sequence with the bit sequence as shifted over N bits (N > 0). By shifting the bit sequence, the bits that fall off at one side, are shifted into the sequence at the empty spaces of the other side of the bit sequence, also referred to as bit sequence rotation. This auto-correlation may be computed for N = 1 to N = sub-lines. All auto-correlation results may be added up, to give one global auto-correlation parameter for the specific bit sequence. A good auto-correlation parameter gives a good chance to have good results if the bit sequences are addressed at random starting points during the print operation.

The above depicted method may be used to generate a plurality of bit sequences for each grey value, where the best M bit sequences are stored in a memory means as alternative bit sequences for each grey value.

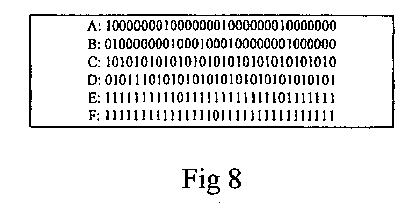

Figs. 8A to F show suitable waveforms 19 for neighbouring grey values selected in accordance with the present invention. The waveforms are selected to give uniform printing with a low probability of banding: Fig. 8A and B for grey values given by 4 and 5 pulses 14, respectively; Fig. 8C and D for grey values given by 16 and 17 pulses 14, respectively; and Fig. 8E and F for grey values given by 30 and 31 pulses 14, respectively. The line time for all waveforms 19 is 32 units. These waveforms 19 should be compared with the known waveforms of Fig. 12. As indicated earlier the occurrence of banding is especially visible in regions of equal to nearly equal image density.

A comparison of the inner Exclusive OR correlation and the neighbouring Exclusive OR correlation is given in Table 1 for the waveforms 19 in Figs. 5 to 8 in accordance with the present invention compared with the known waveforms of the type shown in Fig. 12 and explained in more detail in US-A-5 193 011.

From Table 1 it can be seen that in accordance with the present invention, the inner Exclusive OR correlation of waveforms 19 for a particular grey value is 10% or greater over a substantial range of grey values (excluding white and black). The average of the inner Exclusive OR correlation for the waveforms 19 over all values of grey in accordance with the present invention is preferably at least 10%, more preferably at least 20% and most preferably at least 35%. Further, the Exclusive OR correlation between waveforms 19 for neighbouring grey values is 8% or greater. The average of the neighbouring Exclusive Or correlation for the waveforms of all grey values and their neighbours is preferably at least 10%, more preferably at least 20 % and most preferably at least 40%, particularly for the light to mid-grey region.

Table 1

| Sample | Inner Exclusive OR correlation in % | Neighbouring Exclusive OR correlation in % |
|---|---|---|
| Fig. 5, grey value 12% | 20 | |
| Fig. 6 1, grey value 44% | 44 | |
| Fig. 7, grey value 50% | 44 | |
| Figs. 5 to 7, Average of all grey values | 36 | |
| Fig. 12, all grey values | 0 | |
| **Fig. 12, Average of all grey values** | **0** | |
| Fig. 8A, grey value 12.5% Fig. 8B, grey value 16% | | 28 |
| Fig. 8C, grey value 50% Fig. 8D, grey value 53% | | 96 |
| Fig. 8E, grey value 94% Fig.5F, grey value 97% | | 9 |
| **Fig. 8, Average for all grey values** | | **44** |
| Fig. 12 all grey values | 0 | 3 |
| **Fig. 12 Average for all grey values** | **0** | **3** |

A comparison of the printing quality between the waveforms 19 of Figs. 5 to 7 of the present invention and the known waveforms in accordance with Fig. 12 and known from US-A-5 193 011 as comparative examples are given in Table 2.

In Table 2 values of the micro-densitometric modulation. MOD, are given for the various waveform examples from measured values from prints in accordance with the two methods. MOD is measured using a 4 micron by 4 mm registration slit scanned in the print direction connected to a grey value densitometer. MOD is defined as:

$$MOD = \frac{D_{MAX} - D_{MIN}}{D_{MAX} + D_{MIN}}$$

where $D_{MAX}$ and $D_{MIN}$ are the maximum and minimum densities measured in the scan.

Table 2

| Grey value to be printed | Comparative examples (Fig. 12) MOD | Examples of the present invention (Figs. 5-7) MOD |
|---|---|---|
| 12% | 0.72 | 0.31 |
| 44% | 0.63 | 0.17 |
| 50% | 0.63 | 0.13 |
| **Average values of all grey values above** | **0.66** | **0.20** |

As seen from Table 2, the MOD values for the present invention are less than 0.5 and preferably less than 0.4, whereas the comparative values are all over 0.6. Even more marked is a comparison between the average MOD values over all the grey values tested. In accordance with the present invention, the average MOD is less than 0.25 for the light to mid-grey region and the average obtained is less than one third of the comparative samples.

The results of table 2 show that there is a clear correlation between the low inner and neighbouring Exclusive OR correlation values of the waveforms of the print control signals according to the present invention and good print quality as compared to known print control signal waveforms.

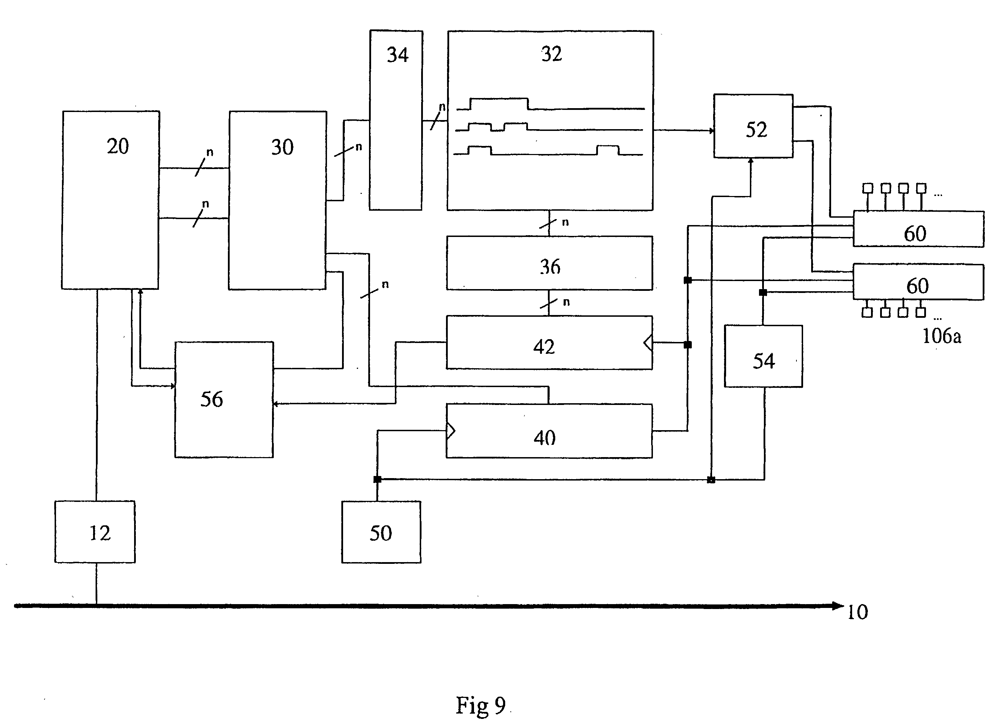

A block diagram of controlling means 111 in accordance with the present invention is shown schematically in Fig. 9. The module can control a large number of control electrodes 106a, e.g. 1024, and the image data for each control electrode 106a is transmitted from a personal computer PC 10 or similar as grey values along a serial line. PC 10 contains a digital representation of an image to be produced in the form of data relating to each pixel of the image. In particular, the grey value of each pixel in the image is stored in PC 10 in the form of bitmap or similar.

The information coming from the PC 10 is received by a micro-controller 20 through a driver 12 and, after a possible processing it is stored in a memory 30. This memory 30 may be configured as a dual port memory and the grey value information for all pixels in one line or print is read into and stored in Memory 30. Memory 30 may contain two parts, one of which is read out while the other one is being written into. Hence, writing and reading may occur simultaneously, in particular in/from different parts and for subsequent lines.

A position counter 40 determines the address for the read part of memory 30. The data at that address then determines the address for a waveform memory 32. Memory 32 contains a binary waveform 19, WFGV, for each grey value GV. Memory 32 has a row decoder 34 and a column decoder 36 which may be integrated into memory 32. An advantage of this principle is that the waveform 19 can be independently chosen for each grey value. The output of waveform memory 32 is connected through a demultiplexer 52 with the input of shift registers 60 which are connected in series. Each shift register 60 is used for the control of a specific number of apertures 107 and contains a latch and a driver for each stage. A bit counter 42 is used for the on/off switching of each bit in the binary waveform at the output of the shift registers 60. At the start of a printing cycle the bit counter 42 and the position counter 40 are set to zero. The position counter 40 now indicates the grey value GV1 of the first aperture 107, $A_1$, in the grey value memory 30. This grey value GV1 is used as address for a corresponding binary waveform WFGV1 in the waveform memory 32. The input of the demultiplexer 52 receives the first bit of the binary waveform WFGV1 which corresponds to the grey value GV1 of the first aperture 107. A pulse from clock 50 increases the value of the position counter 40 by one.

The grey value GV2 of the next aperture 107, $A_2$, is now indicated and the input of another shift register 60 receives the first bit of the corresponding binary waveform WFGV2. These steps are repeated until all shift registers 60 have received data. When all shift registers 60 are switched in series, the preceding step will not be executed. The last pulse of clock 50 delivers a clock pulse for all shift register 60 through a divider 54. When all grey values GV1 to GVn have been read from the memory 30, the first bit of the binary waveform in each shift register 60 has been output to the control electrodes 106a.

The position counter 40 generates a terminal count signal so that the value of bit counter 42 is increased by one. This terminal count signal is also the latch activating signal for the shift registers 60. Position counter 40 goes again through all grey values GV1 to GVn in memory 30, whereby now the second bit of each of the binary waveforms WFGV1 to WFGVn is output to the control electrodes 106a.

When the value of the bit counter 42 equals the amount of bit positions in the binary waveforms WFGV1 to WFGVn, such as e.g. 64, the next terminal count of the position counter 40 will start the terminal count of the bit counter 42. At that moment a complete row has been printed out.

The next row will now have to be printed. For this purpose the grey values have to be taken from another page of the grey value memory 30. The page logic 56 controls the correct addressing of the memory 30 and transmits a signal to the micro-controller 20 indicating which page has to be written.

The waveforms 19 in accordance with the first to fifth embodiments, and particularly in accordance with the third to fifth embodiments, provide DEP of a considerably improved printing quality, particularly for the mid- and light grey tones. However, for black or dark grey tones there are few possibilities for variations in the waveforms 19 within the line time LT. In accordance with the sixth embodiment of the present invention, voltage modulation is used to provide further waveforms for all grey values and particularly for the darker tones. In accordance with the sixth embodiment, the voltage V3 is normally set to a level Vnorm between V30 and V3n, the line time is divided into a plurality of sub-lines, e.g. 64, 128 or 256, and time modulation in accordance with any of the first to fifth embodiments is used to produce the grey values. In addition, waveforms 19 are selected which include pulses having voltages between Vnorm and V30. With these voltages, a black pixel can be produced without using up the complete time period LT as more toner is deposited during the pulses having V3 equal to a voltage between Vnorm and V30 as those at Vnorm. Thus, in accordance with the sixth embodiment, the sum of all the individual pulses 14 within one line time does not necessarily equal the line time even when printing black. This allows more variations in acceptable waveforms 19 particularly for the darker tones. The waveforms 19 may be controlled by a modified control means 111 in accordance with the present invention. The memory 30 may be used to store the binary waveforms 19 which determine the pulse width modulation of the print control signal. A second memory may store information as a binary sequence for control of the voltage to the control electrode 106a. The microprocessor 20 is then configured to address both memories when a particular grey value is to be printed.

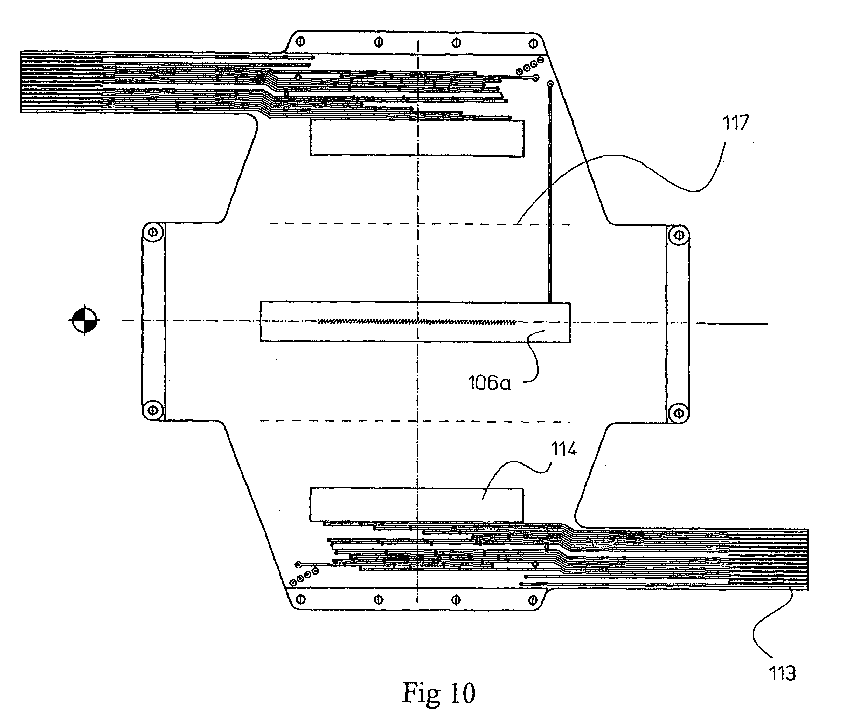

Fig. 10 is a schematic view of a preferred printing head 106 in accordance with the present invention. The printing head 106 is made preferably form a polyimide film of 50 micron thickness, double sided coated with a 17 micron copper film. On the side of the printing head 106 facing the image receiving member 109, a rectangular shaped control electrode 106a is arranged around each rectangular aperture 107. As can be seen from Fig. 2, the width of the pixel shape is determined by one dimension of the aperture 107 whereas the other dimension is determined by the number and width of the sub-lines. It is therefore advantageous to use a rectangular aperture 107 which is wider than it is deep as it will result in a relatively symmetrical rectangular or square shape to each pixel. Further, the voltage required to close off a thin rectangular aperture 107 is about a third of the voltage required to suppress toner supply for a symmetrical aperture of the same area.

Each control electrode 106a is addressable from a high voltage DC supply. The printing head 106 has preferably four rows of apertures 107. The apertures 107 have a width to depth ratio of at least 3 to 1. Typical values of the width and depth are 400 and 100 micron. The rows of apertures 107 are staggered to obtain an overall resolution of 75 dpi. The apertures 107 may be constructed by the known techniques of copper etching and excimer laser burning. On the shield electrode side of the printing head 106 is provided: the shield electrode 106b which is grounded and a copper zone 114 located at the same position as the control means 111 on the other side of the printing head 106. The copper zone and the control means 111 are located outside an area 117 defined by the dashed lines. The area between markings 117 is bent over a four bar frame as described in EP-A-0 712 056 which is incorporated herein by reference. This leads to a flatness between the markings 117 of better than 25 micron. Data leads 113 are also provided and are used to receive via a zero insertion force (ZIF) connector a serial train of pulses that are converted into parallel image signals by said control means 111.

As best shown in Fig. 11, on the other side of the printing head 106 is provided the conductive paths 118 between the control means 111 and the control electrodes 106a around the apertures. On the edges of the printing head 106, reinforced area 115 are provided with through holes with extra reinforcements 116 that are used to stretch the printing head structure over the four bar frame via resilient means described in EP-A-0 712 556. The control means 111 are bonded to said printhead structure by techniques well known to those skilled in the art comprising wire bonding or SMD mounting, and are connected via paths 112 to a high voltage supply (not shown).

A DEP device 100 according to an embodiment of the present invention can be operated successfully when a single magnetic brush 104 is used in contact with the charged toner conveyor 103 (CTC) to provide a layer of charged toner on said CTC 103.

In a DEE device 100 according to a further embodiment of the present invention, said toner delivery means 101 creates a layer of toner particles upon said charged toner conveyer 103 from two different magnetic brushes 104 with multicomponent developer (e.g. a two component developer, comprising carrier and toner particles wherein the toner particles are tribo-electrically charged by the contact with carrier particles or 1.5 component developers, wherein the toner particles get tribo-electrically charged not only by contact with carrier particles, but also by contact between the toner particles themselves).

In a DEP device 100 according to an embodiment of the present invention an additional AC-source can be connected to the sleeve of a single magnetic brush 104 or to any of the sleeves of a device using multiple magnetic brushes 104.

In a DEP device 100 according to another embodiment of the present invention said charged toner particles are extracted directly from a magnetic brush 104 containing mono-component or multi-component developer.

The magnetic brush 104 (or plural magnetic brushes) preferentially used in a DEP device 100 according to an embodiment of the present invention is of the type with stationary core and rotating sleeve.

In a DEP device 100 according to an embodiment of the present invention and using a magnetic brush of the type with stationary core and rotating sleeve, any type of known carrier particles and toner particles can successfully be used. It is however preferred to use "soft" magnetic carrier particles. "Soft" magnetic carrier particles useful in a DEP device 100 according to a preferred embodiment of the present invention are soft ferrite carrier particles. Such soft ferrite particles exhibit only a small amount of remanent behaviour, characterised in coercivity values ranging from about 50 up to 250 Oe. Further, very useful soft magnetic carrier particles, for use in a DEP device 100 according to a preferred embodiment of the present invention, are composite carrier particles, comprising a resin binder and a mixture of two magnetites having a different particle size as described in EP-A-0 289 663.

The particle size of both magnetites will vary between 0.05 and 3 micron. The carrier particles have preferably an average volume diameter (dv50) between 10 and 300 micron, preferably between 20 and 100 micron. More detailed descriptions of carrier particles, as mentioned above, can be found in EP-A-0 675 417.

It is preferred to use in a DEP device 100 according to an embodiment of the present invention, toner particles with an absolute average charge (|q|) corresponding to 1 fC < |q| < 20 fC, preferably to 1 fC < |q| < 10 fC. The absolute average charge of the toner particles is measured by an apparatus sold by Dr. R. Epping PES Laboratorium D-8056 Neufahrn, Germany under the name "q-meter". The q-meter is used to measure the distribution of the toner particle charge (q in fC) with respect to a measured toner diameter (d in 10 micron). From the absolute average charge per 10 micron (|q|/10 micron) the absolute average charge |q| is calculated. Moreover it is preferred that the charge distribution, measured with the apparatus cited above, is narrow, i.e. shows a distribution wherein the coefficient of variability (Þ), i.e. the ratio of the standard deviation to the average value, is equal to or lower than 0.33. Preferably the toner particles used in a device according to the present invention have an average volume diameter (dv50) between 1 and 20 micron, more preferably between 3 and 15 micron. More detailed descriptions of toner particles, as mentioned above, can be found in EP-A-0 675 417.

The combination of a high spatial resolution, of high print quality, particularly in uniformity of grey tone and of the multiple grey level capabilities of the DEP device and method according to the present invention, opens the way for multilevel halftoning techniques, such as e.g. described in the EP-A-0 634 862, that is equivalent to US-A-5 654 808. This enables the DEP device 100 and method, according to the present invention, to render high quality images.

For those skilled in the art it will be clear that the same effects as those described in detail in the invention can be achieved by controlling the other electric fields present in a DEP device and that the control of V3 is a preferred embodiment of the invention, but that the invention is not restricted thereto.

**Claims**

1. A printing device adapted for grey-scale printing comprising :

   - a printing head structure (106),
   - an array of printing elements (107) in said printing head structure (106)
   - at least one control means (111) for supplying a control signal to said printing head, wherein :

     (i) said control means sends a print signal within a line time used for printing a pixel dot to each said printing element which is to be enabled to print said pixel dot intended to have a density D onto an image receiving member as part of a line of print, said print signal including at least one on-time and one off-time during said line time for an intermediate density D, said printing element being enabled for printing during said on-time and prevented from printing during said off-time, and
     (ii) the on-times and off-times of said plurality of print signals are chosen so that within a visible area of multiple pixel dots on said image receiving member, repetitive artifact print structures having a period of a line of print or multiples thereof are substantially avoided.

2. A printing device adapted for grey-scale printing comprising :

   - a printing head structure (106),
   - an array of printing elements (107) in said printing head structure (106)
   - at least one, control means (111) for supplying a control signal to said printing head, wherein :

     (i) said control means sends a print signal within a line time used for printing a pixel dot to each said printing element which is to be enabled to print said pixel dot intended to have a density D onto an image receiving member as part of a line of print, said print signal including at least one on-time and one off-time for an intermediate density D, said printing element being enabled for printing during said on-time and prevented from printing during said off-time, and
     (ii) the on-times and off-times of said plurality of print signals are chosen so that the energy consumption of said printing head is distributed over said line time.

3. A printing device according to claim 1 or 2, wherein said control means includes a memory, said print signal is represented by a binary bit sequence and for each density D at least one binary bit sequence is stored in said memory as a print signal for that density.

4. A printing device according to any of claims 1 to 3, wherein to print a line of print, said printing head is enabled to print within a line time, and for any print signal, the first on-time within said line time may be delayed from the start of the line time.

5. A printing device according to claim 4, wherein said delay is determined either randomly, or in accordance with an algorithm or as a next value in a cyclic sequence.

6. A printing device according to any of the preceding claims, wherein said control means can provide at least two different print signals for a substantial number of densities D, and for each print signal for one of said densities D, said control means selects one of said at least two different print signals.

7. A printing device according to any of the preceding claims, wherein said control means can provide at least two different print signals for each density D, and for each print signal for one of said densities D, said control means selects one of said at least two different print signals.

8. A printing device according to claim 7 as dependent upon claims 3 to 5, wherein said different print signals are stored in said memory.

9. A printing device according to claim 8, wherein said print signal for a density D is selected as one of said stored different print signals randomly, in accordance with an algorithm or as a next in a cyclic sequence.

10. A printing device according to any of the preceding claims, wherein said print signal includes a plurality of on- and off times and said on-times are distributed throughout said line time.

11. A printing device in accordance with claim 10, wherein the delay of the first on- and/or off-time from the start of the line time in a print signal is determined either randomly, or in accordance with an algorithm or as a next in a cyclic sequence.

12. A printing device according to any of the preceding claims wherein the neighbouring Exclusive OR correlation value for the on- and off times for said plurality of print signals for a plurality of densities D is at least 8%, preferably greater than at least 10%, more preferably at least 20% and most preferably at least 40%.

13. A printing device according to any of the claims 5 to 12, wherein the inner Exclusive OR correlation value for the plurality of different print signals for each density D is at least 8%, preferably at least 10%, more preferably at least 20% and most preferably at least 40%.

14. A printing device according to any of the preceding claims wherein said printing device is a DEP device, said printing elements are printing apertures (107) in said printing head structure (106) through which a particle flow is electrically modulated by a control electrode (106a), and said at least one control means (111) applies an electric field to said control electrodes, further comprising a toner delivery means (101).

15. A method of controlling a printing device adapted for grey-scale printing including :

   - a printing head structure (106), and
   - an array of printing elements (107) in said printing head structure (106)

   comprising the steps of :

   - sending a print signal to each said printing element which is to be enabled to print a pixel dot intended to have a density D onto an image receiving member as part of a line of print, said print signal including at least one on-time and one off-time in mid-densities D, said printing element being enabled for printing during said on-time and prevented from printing during said off-time, and
   - selecting the on-times and off-times of said plurality of print signals so that within a visible area of multiple pixel dots on said image receiving member, repetitive artefact print structures having a period of a line of print or multiples thereof are substantially avoided.

16. A method of controlling a printing device adapted for grey-scale printing including :

   - a printing head structure (106), and
   - an array of printing elements (107) in said printing head structure (106)

   comprising the steps of :

- sending a print signal within a line time used for printing a pixel dot to each said printing element which is to be enabled to print said pixel dot intended to have a density D onto an image receiving member as part of a line of print, said print signal including at least one on-time and one off-time in mid-densities D, said printing element being enabled for printing during said on-time and prevented from printing during said off-time, and
- selecting the on-times and off-times of said plurality of print signals so that the energy consumption of said printing head is distributed over said line time.

**Patentansprüche**

1.  Eine für Graustufendruck ausgelegte Druckeinrichtung, enthaltend :

    - eine Druckkopfkonstruktion (106),
    - eine Matrix von Druckelementen (107) in der Druckkopfkonstruktion (106),
    - zumindest ein Steuerelement (111), das dem Druckkopf ein Steuersignal zuführt, wobei :

        (i) das Steuerelement innerhalb einer Zeilenzeit ein zum Drucken eines Bildelements dienendes Drucksignal zu jedem Druckelement sendet, das in der Lage gestellt werden muß, auf einem bildaufnehmenden Element ein Bildelementpunkt mit einer bezweckten Dichte D als Teil einer zu druckenden Zeile zu drucken, wobei das Drucksignal zum Drucken einer Zwischendichte zumindest eine Ein- und eine Ausschaltzeit während der Zeilenzeit umfaßt und das Druckelement im Laufe des Druckvorgangs während der Einschaltzeit druckfähig ist und während der Ausschaltzeit nicht drucken kann, und
        (ii) die Ein- und Ausschaltzeiten der mehreren Drucksignale so gewählt werden, daß innerhalb eines sichtbaren Bereiches von mehreren Bildelementpunkten auf dem bildaufnehmenden Element sich wiederholende Artefaktdruckstrukturen mit einer Periode oder Perioden einer Druckzeile im wesentlichen vermieden werden.

2.  Eine für Graustufendruck ausgelegte Druckeinrichtung, enthaltend :

    - eine Druckkopfkonstruktion (106),
    - eine Matrix von Druckelementen (107) in der Druckkopfkonstruktion (106),
    - zumindest ein Steuerelement (111), das dem Druckkopf ein Steuersignal zuführt, wobei :

        (i) das Steuerelement innerhalb einer Zeilenzeit ein zum Drucken eines Bildelements dienendes Drucksignal zu jedem Druckelement sendet, das in der Lage gestellt werden muß, auf einem bildaufnehmenden Element ein Bildelementpunkt mit einer bezweckten Dichte D als Teil einer zu druckenden Zeile zu drucken, wobei das Drucksignal zum Drucken einer Zwischendichte zumindest eine Ein- und eine Ausschaltzeit umfaßt und das Druckelement im Laufe des Druckvorgangs während der Einschaltzeit druckfähig ist und während der Ausschaltzeit nicht drucken kann, und
        (ii) die Ein- und Ausschaltzeiten der mehreren Drucksignale so gewählt werden, daß der Energieverbrauch des Druckkopfes über die Zeilenzeit verteilt wird.

3.  Eine Druckeinrichtung nach Anspruch 1 oder 2, **dadurch gekennzeichnet, daß** das Steuerelement einen Speicher umfaßt, das Drucksignal durch eine binäre Bitsequenz dargestellt wird und für jede Dichte D zumindest eine binäre Bitsequenz als Drucksignal für die Dichte im Speicher gespeichert wird.

4.  Eine Druckeinrichtung nach einem der Ansprüche 1 bis 3, **dadurch gekennzeichnet, daß** der Druckkopf zum Drucken einer Druckzeile in der Lage gestellt wird, innerhalb einer Zeilenzeit zu drucken, und für jedes Drucksignal die erste Einschaltzeit innerhalb der Zeilenzeit am Beginn der Zeilenzeit verzögert werden kann.

5.  Eine Druckeinrichtung nach Anspruch 4, **dadurch gekennzeichnet, daß** die Verzögerung entweder nach Zufallsregeln oder gemäß einem Algorithmus oder als nächster Wert in einer zyklischen Sequenz bestimmt wird.

6.  Eine Druckeinrichtung nach einem der vorstehenden Ansprüche, **dadurch gekennzeichnet, daß** das Steuerelement zumindest zwei verschiedene Drucksignale für eine erhebliche Anzahl von Dichten D liefern kann und für jedes Drucksignal für eine der Dichten D zumindest eine der zumindest zwei verschiedenen Drucksignale wählt.

7.  Eine Druckeinrichtung nach einem der vorstehenden Ansprüche, **dadurch gekennzeichnet, daß** das Steuerelement zumindest zwei verschiedene Drucksignale für jede Dichte D liefern kann und für jedes Drucksignal für eine der Dichten D zumindest eine der zumindest zwei verschiedenen Drucksignale wählt.

8. Eine Druckeinrichtung nach Anspruch 7 als Unteranspruch der Ansprüche 3 bis 5, **dadurch gekennzeichnet, daß** die verschiedenen Drucksignale im Speicher gespeichert werden.

9. Eine Druckeinrichtung nach Anspruch 8, **dadurch gekennzeichnet, daß** das Drucksignal als eines der gespeicherten unterschiedlichen Drucksignale für eine Dichte D entweder nach Zufallsregeln oder gemäß einem Algorithmus oder als nächster Wert in einer zyklischen Sequenz gewählt wird.

10. Eine Druckeinrichtung nach einem der vorstehenden Ansprüche, **dadurch gekennzeichnet, daß** das Drucksignal mehrere Ein- und Ausschaltzeiten umfaßt und die Einschaltzeiten über die Zeilenzeit verteilt sind.

11. Eine Druckeinrichtung nach Anspruch 10, **dadurch gekennzeichnet, daß** die Verzögerung der ersten Ein- und/ oder Ausschaltzeit ab dem Beginn der Zeilenzeit in einem Drucksignal entweder nach Zufallsregeln oder gemäß einem Algorithmus oder als nächster Wert in einer zyklischen Sequenz bestimmt wird.

12. Eine Druckeinrichtung nach einem der vorstehenden Ansprüche, **dadurch gekennzeichnet, daß** der benachbarte Exklusiv-ODER-Korrelationswert für die Ein- und Ausschaltzeiten für die mehreren Drucksignale für mehrere Dichten D zumindest 8%, vorzugsweise zumindest 10%, besonders bevorzugt zumindest 20% und ganz besonders bevorzugt zumindest 40% beträgt.

13. Eine Druckeinrichtung nach einem der Ansprüche 5 bis 12, **dadurch gekennzeichnet, daß** der innere Exklusiv-ODER-Korrelationswert für die mehreren Drucksignale für jede Dichte D zumindest 8%, vorzugsweise zumindest 10%, besonders bevorzugt zumindest 20% und ganz besonders bevorzugt zumindest 40% beträgt.

14. Eine Druckeinrichtung nach einem der vorstehenden Ansprüche, **dadurch gekennzeichnet, daß** die Druckeinrichtung eine DEP-Druckeinrichtung ist, die Druckelemente Drucköffnungen (107) in der Druckkopfkonstruktion (106) sind, durch die ein Teilchenstrom mittels einer Steuerelektrode (106a) elektrisch moduliert wird, und das zumindest eine Steuerelement (111) ein elektrisches Feld an die Steuerelektroden anlegt, wobei die Druckeinrichtung weiterhin ein Tonerzuliefermittel (101) enthält.

15. Ein Verfahren zur Steuerung einer für Graustufendruck ausgelegten Druckeinrichtung, die :

    - eine Druckkopfkonstruktion (106), und
    - eine Matrix von Druckelementen (107) in der Druckkopfkonstruktion (106) enthält,

    wobei das Verfahren durch die nachstehenden Schritte **gekennzeichnet** ist :

    - es wird ein Drucksignal zu jedem Druckelement gesandt, das in der Lage gestellt werden muß, auf einem bildaufnehmenden Element ein Bildelementpunkt mit einer bezweckten Dichte D als Teil einer zu druckenden Zeile zu drucken, wobei das Drucksignal zum Drucken von Mitteldichten zumindest eine Ein- und eine Ausschaltzeit umfaßt und das Druckelement im Laufe des Druckvorgangs während der Einschaltzeit druckfähig ist und während der Ausschaltzeit nicht drucken kann, und
    - die Ein- und Ausschaltzeiten der mehreren Drucksignale werden so gewählt, daß innerhalb eines sichtbaren Bereiches von mehreren Bildelementpunkten auf dem bildaufnehmenden Element sich wiederholende Artefaktdruckstrukturen mit einer Periode oder Perioden einer Druckzeile im wesentlichen vermieden werden.

16. Ein Verfahren zur Steuerung einer für Graustufendruck ausgelegten Druckeinrichtung, die :

    - eine Druckkopfkonstruktion (106), und
    - eine Matrix von Druckelementen (107) in der Druckkopfkonstruktion (106) enthält,

    wobei das Verfahren durch die nachstehenden Schritte **gekennzeichnet** ist :

    - es wird innerhalb einer Zeilenzeit ein zum Drucken eines Bildelements dienendes Drucksignal zu jedem Druckelement gesandt, das in der Lage gestellt werden muß, auf einem bildaufnehmenden Element ein Bildelementpunkt mit einer bezweckten Dichte D als Teil einer zu druckenden Zeile zu drucken, wobei das Drucksignal zum Drucken von Mitteldichten zumindest eine Ein- und eine Ausschaltzeit umfaßt und das Druckelement im Laufe des Druckvorgangs während der Einschaltzeit druckfähig ist und während der Ausschaltzeit nicht drucken kann, und

- die Ein- und Ausschaltzeiten der mehreren Drucksignale werden so gewählt, daß der Energieverbrauch des Druckkopfes über die Zeilenzeit verteilt wird.

## Revendications

1. Dispositif d'impression conçu pour imprimer dans la gamme de toutes les nuances de gris, comprenant :

   - une structure de tête d'impression (106) ;
   - une matrice d'éléments d'impression (107) dans ladite structure de tête d'impression (106) ;
   - au moins un moyen de réglage (111) pour acheminer un signal de commande à ladite tête d'impression, dans lequel :

      (i) ledit moyen de commande envoie un signal d'impression, au cours d'un temps de ligne pour imprimer un point de trame de la dimension d'un pixel, à chacun desdits éléments d'impression qui doit être mis en état d'imprimer ledit point de trame de la dimension d'un pixel qui possédera une densité D sur un élément de réception d'image, à titre de partie d'une ligne d'impression, ledit signal d'impression englobant au moins un temps de mise en circuit et un temps de mise hors circuit au cours dudit temps de ligne pour une densité intermédiaire D, ledit élément d'impression étant mis en état d'imprimer au cours dudit temps de mise en circuit et étant empêché d'imprimer au cours dudit temps de mise hors circuit, et
      (ii) les temps de mise en circuit et les temps de mise hors circuit desdits plusieurs signaux d'impression sont sélectionnés de telle sorte que, dans les limites d'une zone visible de multiples points de trame de la dimension d'un pixel, on évite de manière substantielle des structures répétitives d'artefacts d'impression comprenant une ligne d'impression ou des multiples de cette dernière.

2. Dispositif d'impression conçu pour imprimer dans la gamme de toutes les nuances de gris, comprenant :

   - une structure de tête d'impression (106) ;
   - une matrice d'éléments d'impression (107) dans ladite structure de tête d'impression (106) ;
   - au moins un moyen de réglage (111) pour acheminer un signal de commande à ladite tête d'impression, dans lequel :

      (1) ledit moyen de commande envoie un signal d'impression, au cours d'un temps de ligne pour imprimer un point de trame de la dimension d'un pixel, à chacun desdits éléments d'impression qui doit être mis en état d'imprimer ledit point de trame de la dimension d'un pixel qui possédera une densité D sur un élément de réception d'image, à titre de partie d'une ligne d'impression, ledit signal d'impression englobant au moins un temps de mise en circuit et un temps de mise hors circuit pour une densité intermédiaire D, ledit élément d'impression étant mis en état d'imprimer au cours dudit temps de mise en circuit et étant empêché d'imprimer au cours dudit temps de mise hors circuit, et
      (2) les temps de mise en circuit et les temps de mise hors circuit desdits plusieurs signaux d'impression sont sélectionnés de telle sorte que la consommation d'énergie de ladite tête d'impression est distribuée sur ledit temps de ligne.

3. Dispositif d'impression selon la revendication 1 ou 2, dans lequel ledit moyen de commande englobe une mémoire, ledit signal d'impression est représenté par une séquence binaire et pour chaque densité D, au moins une séquence binaire est stockée dans ladite mémoire à titre de signal d'impression pour cette densité.

4. Dispositif d'impression selon l'une quelconque des revendications 1 à 3, dans lequel, pour imprimer une ligne d'impression, ladite tête d'impression est mise en état d'imprimer au cours d'un temps de ligne et, pour n'importe quel signal d'impression, le premier temps de mise en circuit dans les limites dudit temps de ligne peut être retardé par rapport au départ du temps de ligne.

5. Dispositif d'impression selon la revendication 4, dans lequel ledit retard est déterminé soit de manière aléatoire, soit en fonction d'un algorithme, soit comme valeur suivante dans une séquence cyclique.

**6.** Dispositif d'impression selon l'une quelconque des revendications précédentes, dans lequel ledit moyen de commande peut procurer au moins deux signaux d'impression différents pour un nombre important de densités D, et pour chaque signal d'impression pour l'une desdites densités D, ledit moyen de commande sélectionne un signal d'impression parmi les signaux d'impression différents au moins au nombre de deux.

**7.** Dispositif d'impression selon l'une quelconque des revendications précédentes, dans lequel ledit moyen de commande peut procurer au moins deux signaux d'impression différents pour chaque densité D, et pour chaque signal d'impression pour l'une desdites densité D, ledit moyen de commande sélectionne un signal d'impression parmi les signaux d'impression différents au moins au nombre de deux.

**8.** Dispositif d'impression selon la revendication 7 lorsqu'elle dépend des revendications 3 à 5, dans lequel différents signaux d'impression sont stockés dans ladite mémoire.

**9.** Dispositif d'impression selon la revendication 8, dans lequel ledit signal d'impression pour une densité D est sélectionné à titre d'un desdits signaux d'impression différents stockés, de manière aléatoire, en fonction d'un algorithme ou à titre de suivant dans une séquence cyclique.

**10.** Dispositif d'impression selon l'une quelconque des revendications précédentes, dans lequel ledit signal d'impression englobe plusieurs temps de mise en circuit et de mise hors circuit, lesdits temps de mise en circuit étant distribués sur ledit temps de ligne.

**11.** Dispositif d'impression selon la revendication 10, dans lequel le retard du premier temps de mise en circuit et/ou du premier temps de mise hors circuit par rapport au départ du temps de ligne dont un signal d'impression est déterminé soit de manière aléatoire, soit en fonction d'un algorithme ou à titre de suivant dans une séquence cyclique.

**12.** Dispositif d'impression selon l'une quelconque des revendications précédentes, dans lequel la valeur de corrélation voisine de type OU exclusif pour les temps de mise en circuit et les temps de mise hors circuit pour lesdits plusieurs signaux d'impression pour plusieurs densités D représente au moins 8 %, de préférence est supérieure à au moins 10 %, de manière plus préférée, s'élève à au moins 20 % et de manière de loin préférée, s'élève à au moins 40 %.

**13.** Dispositif d'impression selon l'une quelconque des revendications 5 à 12, dans lequel la valeur de corrélation interne de type OU exclusif pour lesdits plusieurs différents signaux d'impression pour chaque densité D représente au moins 8 %, de préférence est supérieure à au moins 10 %, de manière plus préférée, s'élève à au moins 20 % et de manière de loin préférée, s'élève à au moins 40 %.

**14.** Dispositif d'impression selon l'une quelconque des revendications précédentes, dans lequel ledit dispositif d'impression est un dispositif DEP, lesdits éléments d'impression sont des orifices d'impression (107) pratiqués dans la structure de tête d'impression (106) à travers lesquels un flux de particules est soumis à une modulation par voie électrique à l'aide d'une électrode de commande (106a), et ledit ou lesdits moyens de réglage (111) appliquent un champ électrique sur lesdites électrodes de commande, comprenant en outre un moyen de distribution de toner (101).

**15.** Procédé pour commander un dispositif d'impression conçu pour imprimer dans la gamme de toutes les nuances de gris englobant :

- une structure de tête d'impression (106) ; et
- une matrice d'éléments d'impression (107) dans ladite structure de tête d'impression (106) ;

comprenant les étapes consistant à :

- envoyer un signal d'impression à chacun desdits éléments d'impression qui doit être mis en état d'imprimer un point de trame de la dimension d'un pixel qui possédera une densité D sur un élément de réception d'image à titre de partie d'une ligne d'impression, ledit signal d'impression englobant au moins un temps de mise en circuit et un temps de mise hors circuit dans les densités moyennes D, ledit élément d'impression étant mis en état d'imprimer au cours dudit temps de mise en circuit et étant empêché d'imprimer au cours dudit temps de mise hors circuit, et
- sélectionner les temps de mise en circuit et les temps de mise hors circuit desdits plusieurs signaux d'impression de telle sorte que, dans les limites d'une zone visible de multiples points de trame de la dimension d'un pixel, on évite de manière substantielle des structures répétitives d'artefacts d'impression comprenant une période de ligne d'impression ou des multiples de cette dernière.

**16.** Procédé pour commander un dispositif d'impression conçu pour imprimer dans la gamme de toutes les nuances de gris englobant:

- une structure de tête d'impression (106) ; et
- une matrice d'éléments d'impression (107) dans ladite structure de tête d'impression (106) ;

comprenant les étapes consistant à :

- envoyer un signal d'impression dans les limites d'un temps de ligne utilisé pour imprimer un point de trame de la dimension d'un pixel à chacun desdits éléments d'impression qui doit être mis en état d'imprimer ledit point de trame de la dimension d'un pixel qui possédera une densité D sur un élément de réception d'image à titre de partie d'une ligne d'impression, ledit signal d'impression englobant au moins un temps de mise en circuit et un temps de mise hors circuit dans des densités moyennes D, ledit élément d'impression étant mis en état d'imprimer au cours dudit temps de mise en circuit et étant empêché d'imprimer au cours dudit temps de mise hors circuit, et
- sélectionner les temps de mise en circuit et les temps de mise hors circuit desdits plusieurs signaux d'impression de telle sorte que la consommation d'énergie de ladite tête d'impression est distribuée sur ledit temps de ligne.

Fig 1

EP 0 851 316 B1

Fig. 2E

Fig. 2D

Fig. 2F

Fig. 2C

Fig. 2G

Fig. 2B

Fig. 2H

Fig. 2A

Fig. 2I

Fig 3

Fig 4

Fig 5

1: 10101010100010100010001010101010101010100010100010101010100000101010101000101010001010101000101000101010101010100000010101000101010

2: 10101010101010101010100000101011100010100010101010100010100010001010000000101010101010101010001010101010001000101010101010100001010

3: 01100110000111100000011001100110000000110011001100110011001100110011000000110011000000011001100110011000000000001100110011000000110

4: 11110000110011001100110011001100110000000110011001100110011000000000000000000001100110011001100000001100110011001100110011001100100000

5: 01100110000001100000011001100110011001100000001100110011001100110011001100110011001100110000000110011000000110000001100110011000000110

6: 11110000111100000000001111110000000000001111000011110000111100001111000011110000111100000000111111100001111100001111000000110000

7: 11110000111001110000000011110000111100001111000011110000111100001111000011110000111100001111000011110000111100001000000000001111

8: 01111111100000000011111111000000000111000000000000011111111000000000111001110000000001111111100000000011100111000000000000011110000000

Fig 6

```
1: 1010101010001010101000101010101010101010100010101010101010101010100010101010101010101010100010101010001010101010101010101010001010101010001010101010101010101010100010101010001010101010101010101010100010101010001010101000101010
2: 1010101010101010101010101010101010101010100010101010101010101000000010100000001010101010101010100010101010101010101010001010101010001010101010101010101010100010101010001010101010101010101010101010101010101010101010101010
3: 0110011000000110011001100110011000000110011001100110011001100110011000000110011001100110011001100110000000110011001100110011001100110000000110011001100110011001100110
4: 1100110011001100110011001100110011001100110011001100110000000000000000000001100110011001100110011001100110011001100110011001100110011001100110
5: 1111000011110000111100001111000011110000111100001111000011110000000000001111000011110000111100001111000011110000111100001111111
6: 0110011000000110011001100110011001100110000001100110011001100110011001100110011001100110011001100110011001100110000000110011001100000001100110011000000110
7: 1111000011111110000000001110000111100001111000011110000111100001111000011110000111100001111000011110000111100001111000011110000111110000000111
8: 0111111110000000001111111100000000011100000000000111111110000000001111111100000000011111110000000001111111100000000011111110000000000011111110000000
```

Fig 7

EP 0 851 316 B1

```
A: 100000001000000010000000100000000
B: 010000000100010001000000001000000
C: 101010101010101010101010101010
D: 010111010101010101010101010101
E: 1111111111011111111111111011111111
F: 111111111111111101111111111111111111
```

## Fig 8

Fig 9

117

113

106a

114

Fig 10

Fig 11

Fig 12